# EUROPÄISCHE PATENTSCHRIFT

(11) **EP 2 502 707 B1**
(45) Veröffentlichungstag und Bekanntmachung des Hinweises auf die Patenterteilung: **09.10.2013**
(21) Anmeldenummer: 12155527.0
(22) Anmeldetag: 15.02.2012
(51) Int. Cl.: B25D 17/00, B25D 17/02, B28D 1/14, B23B 51/02, B23B 51/08, B23B 51/10, F16B 37/12

(54) **Befestigungssystem**
Fastening system
Système de fixation

(30) Priorität: 24.03.2011 DE 102011006018
(43) Veröffentlichungstag der Anmeldung: 26.09.2012
(73) Patentinhaber: HILTI Aktiengesellschaft, 9494 Schaan (LI)
(72) Erfinder: Sander, Bernhard, 81379 München (DE); Appl, Joerg, 9470 Buchs (CH); Lutz, Clemens, 9470 Buchs (CH); Tognini, Roger, 9435 Heerbrugg (CH)

(56) Entgegenhaltungen:
- EP-A1- 1 249 327
- DE-A1- 19 620 955
- US-A- 2 707 897
- US-A- 3 353 437

## Beschreibung

Die Erfindung betrifft ein Befestigungssystem mit einem Bohrer und einem eine Schneidkante und eine Schlagfläche aufweisenden, hülsenartigen Befestigungselement, das so ausgebildet ist, dass es nach Abschluss der Bohrarbeiten im Bohrloch verbleibt, wogegen der Bohrer entfernt wird. Das Befestigungselement ist über die Schlagfläche mit axial wirkenden Kräften beaufschlagbar. Das Befestigungselement weist eine axiale, mit einem Innengewinde versehene Durchgangsöffnung auf, durch die sich der Bohrer erstreckt.

Ein derartiges Befestigungselement ist aus der DE 196 20 955 A1 bekannt. Befestigungssysteme dieser Art erlauben es, in einem Arbeitsschritt die Aufnahmebohrung zu erstellen und das Befestigungselement in diese einzutreiben und dort zu verankern. Auf diese Weise reduziert sich der Arbeitsaufwand zum Setzen des Befestigungselements deutlich. Da das Befestigungselement selbst am Formen des Bohrlochs beteiligt ist, besteht jedoch die Gefahr, dass das Gewinde durch Bohrklein oder durch den Bohrer beschädigt wird.

Aufgabe der Erfindung ist es, ein derartiges Befestigungssystem auf einfache Weise zu verbessern und das Setzen des Befestigungselements störungsfreier zu gestalten.

Dies wird erfindungsgemäß dadurch erreicht, dass ein separater Gewindeschutz für das Innengewinde vorgesehen ist. Auf diese Weise ist das empfindliche Innengewinde vor Beschädigungen geschützt, und bei der Gestaltung des Befestigungssystems und bei der Erstellung des Bohrlochs müssen keine besonderen Vorkehrungen zum Schutz des Gewindes getroffen werden.

Der Gewindeschutz ist beispielsweise eine Kunststoffhülse. Es ist vorteilhaft, wenn der Gewindeschutz lösbar mit dem Befestigungselement verbunden ist und zerstörungsfrei und vorzugsweise werkzeugfrei vom Gewinde gelöst werden kann.

Der Gewindeschutz kann eine Fixierstruktur aufweisen, mittels der er in der Durchgangsöffnung fixiert ist. Beispielsweise kann er dort verklemmt sein. In einer möglichen Variante kann eine den Gewindeschutz bildende Hülse mit Vorspannung am Innengewinde anliegen. Die Hülse kann geschlitzt ausgebildet sein, um leichter eine Vorspannung erzeugen zu können. Es ist möglich, an einem Ende der Hülse radial abstehende Flügel vorzusehen, die beispielsweise über der Schlagfläche liegen und die eine Fixierung in axialer Richtung bewirken. Die Hülse kann auch an einem axialen Ende eine oder mehrere Klemmleisten aufweisen, die für eine Verklemmung im Innengewinde sorgen. Andere geeignete Gestaltungen einer Fixierstruktur sind ebenfalls denkbar.

Vorzugsweise ist der Gewindeschutz so ausgebildet, dass er bei der Entfernung des Bohrers aus dem Bohrloch aus dem Befestigungselement entfernbar ist. Auf diese Weise ist kein separater Bearbeitungsschritt notwendig, um den Gewindeschutz zu entfernen. Außerdem ist sichergestellt, dass er nicht im Befestigungselement vergessen werden kann.

Der Gewindeschutz kann auch durch eine Schicht eines zähen Fettes oder Wachses realisiert sein, mit der das Innengewinde abgedeckt ist. Ein derartiger Gewindeschutz verbleibt im Gewinde, und das Material wird beim Eindrehen einer Schraube aus dem Gewinde verdrängt.

Es ist auch möglich, den Gewindeschutz, beispielsweise in Form einer beschriebenen Hülse, so auszubilden, dass er im Befestigungselement verbleibt und bei Eindrehen einer Schraube nach unten aus dem Befestigungselement herausgedrängt wird.

Das Befestigungselement ist vorzugsweise bezüglich einer Rotationsbewegung vom Bohrer entkoppelt, sodass es lediglich in axialer Richtung angetrieben wird.

Zu diesem Zweck kann der Bohrer eine mit der Schlagfläche des Befestigungselements zusammenwirkende zweite Schlagfläche zur Übertragung von axialen Kräften aufweisen. Dies erlaubt es, den Bohrer sowohl axial als auch tangential anzutreiben, wobei die Schlagfläche des Befestigungselements und die Schlagfläche des Bohrers in Rotationsrichtung aneinander gleiten.

In einer bevorzugten Ausführungsform der Erfindung ist eine Mantelfläche des Befestigungselements angrenzend an die Schneidkante im Querschnitt so reduziert, dass ein Freiwinkel zwischen der Schneidkante und der Mantelfläche realisiert ist. Es hat sich gezeigt, dass durch das Vorsehen eines Freiwinkels ein besseres Schneidergebnis zu erzielen ist.

Der Freiwinkel beträgt vorzugsweise zwischen 1° und 20°, und bevorzugt zwischen 3° und 8°. Die Querschnittsreduktion beginnt vorteilhaft direkt angrenzend an die Schneidkante, beträgt vorzugsweise gegenüber dem Durchmesser an der Schneidkante um 1,5 bis 5 % und ist bevorzugt größer oder gleich 0,1 mm.

Die Schneidkante ist insbesondere umlaufend ausgebildet. Sie kann vollständig in einer Ebene liegen oder zumindest abschnittsweise von der Ebene abweichen.

Nach einer weiteren bevorzugten Ausführungsform der Erfindung weist eine Mantelfläche des Befestigungselements eine Befestigungsgeometrie zur Fixierung des Befestigungselements im Bohrloch auf. Auf diese Weise lassen sich unter Last die Kräfte und Momente, die auf das Befestigungselement aufgebracht werden, besser in den Untergrund einleiten. Die Befestigungsgeometrie beginnt bevorzugt direkt hinter einer den Freiwinkel bildenden Querschnittsreduzierung und nimmt bis zu zwei Drittel der verbleibenden Mantelfläche des Befestigungselements ein. Sie kann sich aber auch über die gesamte axiale Länge des Befestigungselements erstrecken.

Es kann eine an sich bekannte Befestigungsgeometrie verwendet werden, wobei neben geometrischen Gestaltungen auch Spreizmechanismen, beispielsweise nach dem Konus-Spreizhülsenprinzip, einsetzbar sind. Auch chemische Verankerungsmittel können verwendet werden, beispielsweise Injektionsmörtel, um eine feste Verbindung zwischen der Mantelfläche des Befestigungselements und der Innenseite des Bohrlochs zu realisieren.

Eine mögliche Befestigungsgeometrie ist die eines sogenannten Hammer-Twist-Anchors, wie er beispielsweise in der DE 197 43 054 A1 gezeigt ist. Eine derartige gewendelte Befestigungsgeometrie erzeugt auch einen gewendelten Hinterschnitt im Untergrundmaterial, was eine gute Befestigung zur Folge hat. Eine solche Geometrie lässt sich vorteilhaft mit einer umlaufenden Schneidkante und einem Freiwinkel, wie er oben beschrieben wurde, kombinieren.

In einer weiteren bevorzugten Ausführungsform der Erfindung ist ein Zwischenstück vorgesehen, das in axialer Richtung angrenzend an die Schlagfläche des Befestigungselements angeordnet ist und das vom Befestigungselement trennbar ist. Vorzugsweise ist das Zwischenstück so angeordnet, dass es zusammen mit dem Bohrer vom Befestigungselement getrennt und aus dem fertiggestellten Bohrloch herausgezogen wird.

Das Zwischenstück hat vorzugsweise eine axial vordere und eine axial hintere Schlagfläche, über die die axialen Kräfte vom Bohrer oder vom Antrieb einer Bohrmaschine an das Befestigungselement weitergegeben werden.

Das Zwischenstück und das Befestigungselement können bezüglich einer Rotationsbewegung entkoppelt sein oder aber in Umfangsrichtung verbunden sein, sodass eine Drehmomentabstützung zur Übertragung des Drehmoments zwischen diesen Bauteilen zur Verhinderung einer Rotation des Befestigungselements ermöglicht ist.

Bei Verwendung eines Zwischenstücks ist der Gewindeschutz vorzugsweise am Zwischenstück befestigt, sodass er einfach zusammen mit diesem entfernt werden kann.

Zur Entfernung des Bohrkleines und des Bohrmehls aus dem Bohrloch sind vorteilhaft von der Durchgangsöffnung ausgehende Auswurföffnungen vorgesehen, wobei die Auswurföffnungen im Befestigungselement und/oder im Zwischenstück angeordnet sind. Die Auswurföffnungen können in Form von radialen Bohrungen realisiert sein.

Der Bohrer hat vorzugsweise eine Bohrspitze, die gegenüber dem Befestigungselement in axialer Richtung vorsteht, sodass der Bohrer eine Pilotbohrung erzeugt, wobei die Bohrspitze vorteilhaft speziell auf den Untergrund abgestimmt ist.

Die Bohrspitze kann entweder fest mit dem Bohrer verbunden sein und mit diesem nach Erstellen des Bohrlochs entfernt werden, es ist aber auch möglich, die Bohrspitze vom Bohrer lösbar zu gestalten, beispielsweise durch axialen Zug, sodass diese im Bohrloch verbleibt. Diese Ausbildung ist beispielsweise in der DE 196 20 955 A1 beschrieben.

Gemäß einer weiteren bevorzugten Ausführungsform weist der Bohrer in einem Schaftbereich eine Schlagentkopplung und/oder eine Schlagdämpfung auf. Dies kann bei Bohrern für zähe Untergründe wie beispielsweise Holz für die Lebensdauer der Bohrspitze vorteilhaft sein, da keine Schlagenergie in die Bohrspitze eingeleitet wird.

Die Schlagentkopplung kann beispielsweise in den Bohrerschaft integriert sein, indem dieser abschnittsweise elastisch ausgebildet ist, oder es kann ein Dämpferelement in Form eines separaten elastischen Bauteils vor der Bohrspitze vorgesehen sein. In beiden Fällen wird vom Antriebsgerät sowohl eine axiale Kraft in Form von axialen Impulsen als auch eine Rotationskraft in Form einer durchgehenden Rotationsbewegung oder in Form von tangentialen Stößen geliefert. Durch einen elastischen Abschnitt bzw. ein Dämpfungselement wird jedoch der axiale Impuls abgeschwächt, sodass die Bohrspitze im Wesentlichen eine Rotationsbewegung, aber keine gepulste Bewegung in axialer Richtung ausführt.

Die Erfindung wird nachfolgend mit Bezug auf die beigefügten Zeichnungen anhand mehrerer Ausführungsbeispiele näher beschrieben. In den Zeichnungen zeigen:
- Figur 1 eine schematische Schnittansicht eines erfindungsgemäßen Befestigungssystems gemäß einer ersten Ausführungsform;
- Figur 2 eine schematische Schnittansicht des Befestigungselements des Befestigungssystems aus Figur 1, eingesetzt in ein Bohrloch;
- Figuren 3 bis 6 schematische perspektivische Ansichten von Varianten eines Gewindeschutzes eines erfindungsgemäßen Befestigungssystems;
- Figur 7 eine schematische Schnittansicht eines Zwischenstücks eines erfindungsgemäßen Befestigungssystems;
- Figur 8 einen schematischen Querschnitt des Zwischenstücks aus Figur 7;
- Figuren 9 bis 11 schematische perspektivische Ansichten einer Schneidkante eines Befestigungselements eines erfindungsgemäßen Befestigungssystems;
- Figur 12 eine schematische Schnittansicht eines Befestigungselements eines erfindungsgemäßen Befestigungssystems gemäß einer zweiten Ausführungsform;
- Figur 13 einen schematischen Schnitt entlang der Linie Xlll-XIII in Figur 12;
- Figur 14 eine schematische perspektivische Ansicht eines Bohrers des erfindungsgemäßen Befestigungssystems gemäß der zweiten Ausführungsform; und
- Figur 15 eine schematische perspektivische teilgeschnittene Ansicht eines erfindungsgemäßen Befestigungssystems gemäß einer dritten Ausführungsform.

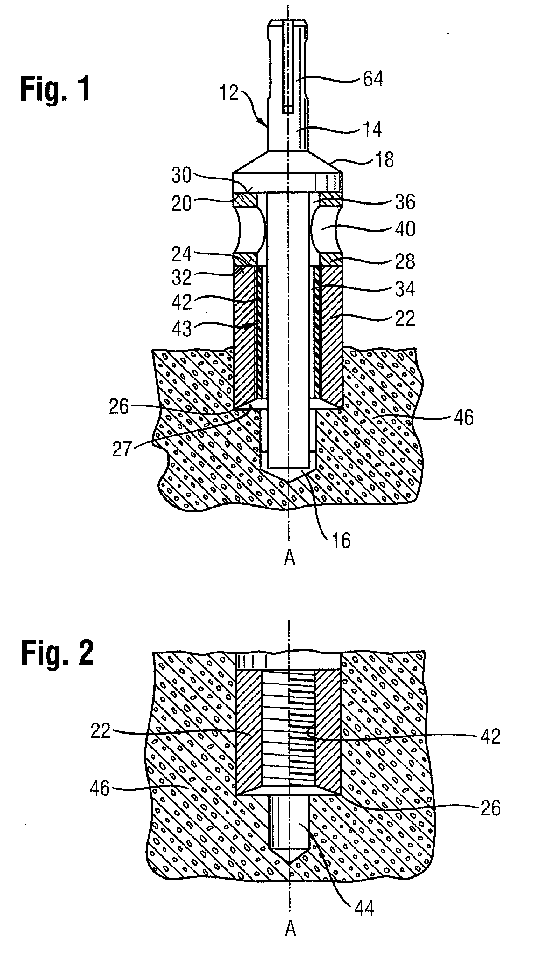

Figur 1 zeigt ein Befestigungssystem 10 mit einem Bohrer 12, der einen Bohrerschaft 14 und eine Bohrspitze 16 aufweist. Am Bohrerschaft 14 ist in einem oberen Abschnitt eine radial vorstehende Schulter 18 mit einer zur Bohrspitze 16 weisenden, im Wesentlichen ebenen Schlagfläche 20 ausgebildet.

Ein Befestigungselement 22, das hülsenartig ausbildet ist und den Bohrerschaft 14 konzentrisch umgibt, ist unterhalb der Schlagfläche 20 angeordnet, wobei es eine im Wesentlichen eben ausgebildete Schlagfläche 24 aufweist, die der Schlagfläche 20 der Schulter 18 zugewandt ist. Beide Schlagflächen weisen eine maximale Abweichung von 3° senkrecht zur Axialrichtung A auf.

An dem der Schlagfläche 24 abgewandten axialen Ende besitzt das Befestigungselement 22 eine möglichst scharfkantige Schneidkante 26. Radial nach innen schließt sich an die Schneidkante 26 eine vordere Abbaufläche 27 an, die das Untergrundmaterial abbaut.

Das Befestigungselement 22 besteht hier aus einem Material, bei dem zumindest die Schlagfläche 24, die Abbaufläche 27 sowie die Schneidkante 26 zumindest punktuell härter und/oder zäher als der Untergrund 46 sind. Vorzugsweise wird als Werkstoff eine Stahllegierung verwendet, die härtbar ist und beim Abbau von Beton zumindest im Bereich der Abbaufläche 27 eine Festigkeit von mehr als 45 HRC erreicht.

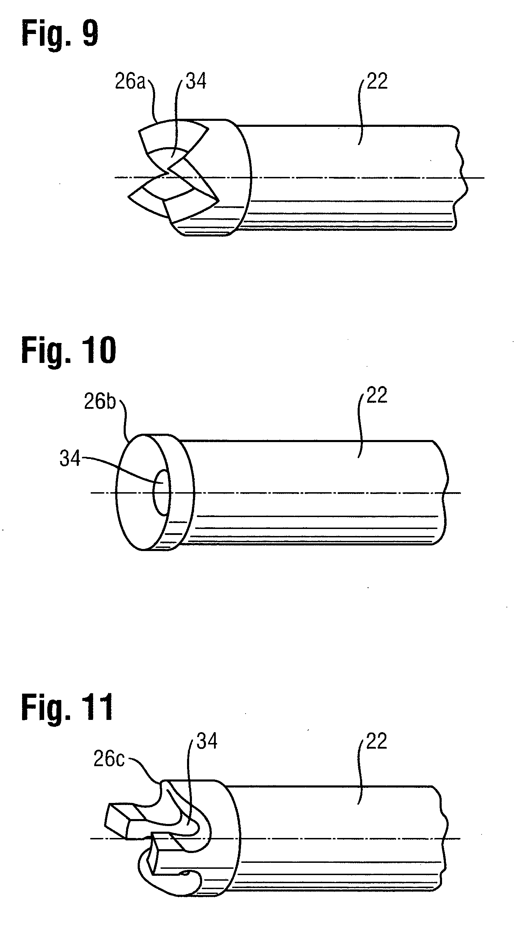

Die Schneidkante 26 ist umlaufend ausgebildet, wobei aber nicht die gesamte Schneidkante 26 in einer Ebene liegen muss. Die Figuren 9 bis 11 zeigen Beispiele für Schneidkanten 26. Diese sind mit den Bezugszeichen 26a bis 26c beschrieben. Auch alle anderen geeigneten Formen sind natürlich verwendbar.

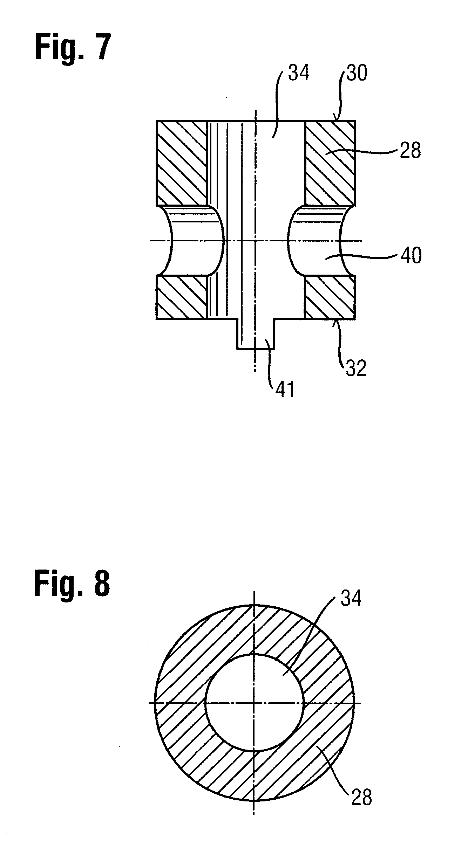

Zwischen der Schlagfläche 20, der Schulter 18 des Bohrers 12 und der Schlagfläche 24 des Befestigungselements 22 ist ein hülsenförmiges Zwischenstück 28 angeordnet, das in den Figuren 7 und 8 näher dargestellt ist. Das Zwischenstück 28 weist eine axial obere Schlagfläche 30 und eine axial untere Schlagfläche 32 auf, wobei die obere Schlagfläche 30 mit der Schlagfläche 20 des Bohrers 12 und die untere Schlagfläche 32 mit der Schlagfläche 24 des Befestigungselements 22 zusammenwirkt.

Das Befestigungselement 22 weist eine zentrale Durchgangsöffnung 34 auf, die mit einer zentralen Durchgangsöffnung 36 des Zwischenstücks 28 fluchtet. Das Zwischenstück 28 weist zwei radiale Auswurföffnungen 40 auf, die in Verbindung mit der Durchgangsöffnung 36 stehen und zum Auswurf von Bohrklein und Bohrmehl dienen. Die Auswurföffnungen 40 sind nahe dem Befestigungselement 22 angeordnet, um den Weg für das Bohrklein zu minimieren.

Es ist möglich, Auswurföffnungen 40 sowohl im Zwischenstück 28 als auch im Befestigungselement 22 vorzusehen.

Der axial untere Rand mit der Schlagfläche 32 weist eine in Axialrichtung vorstehende Struktur 41 zur Drehmomentkopplung mit dem Befestigungselement 22 auf.

Die Schlagfläche 30, die mit der Schlagfläche 20 des Bohrers 12 zusammenwirkt, ist dagegen glatt gestaltet, sodass vom Bohrer 12 lediglich axiale, aber keine tangentialen Kräfte übertragen werden.

Das Zwischenstück 28 kann als loses, separates Bauteil gestaltet sein oder könnte auch mit dem Bohrer 12 verbunden sein.

Auch für die Schlagflächen 24, 30 zwischen dem Zwischenstück und dem Befestigungselement 22 ist ein Winkel von ≤ 3° ideal.

Der Querschnitt des Zwischenstücks 28 ist etwas kleiner gewählt als der Querschnitt des Befestigungselements 22, hier wenigstens 0,2 mm bzw. 1,5 bis 5 % des Durchmessers des Befestigungselements 22 kleiner.

Das Zwischenstück 28 besteht aus einem Material, das härter und/oder zäher ist als das des Befestigungselements 22. Als Werkstoff wird hier eine Stahllegierung verwendet, die härtbar ist und die beim Abbau von Beton zumindest im Bereich der Schlagflächen 30, 32 eine Festigkeit von mehr als 48 HRC erreicht.

Die Bohrspitze 16 ragt in Axialrichtung A ein Stück über die Schneidkante 26 des Befestigungselements 22 hinaus. Der Überstand, den die Bohrspitze 16 gegenüber der Schneidkante 26 des Befestigungselements 22 hat, ist hier in etwa gleich der Differenz aus Durchmesser des Befestigungselements 22 und dem Bohrlochdurchmesser. Er könnte auch größer gewählt sein.

Das Befestigungselement 22 ist vom Bohrer 12 und vom Zwischenstück 28 lösbar gestaltet und weist ein (in den Figuren nur angedeutetes) Innengewinde 42 auf.

Das Innengewinde 42 ist durch einen Gewindeschutz 43 abgedeckt.

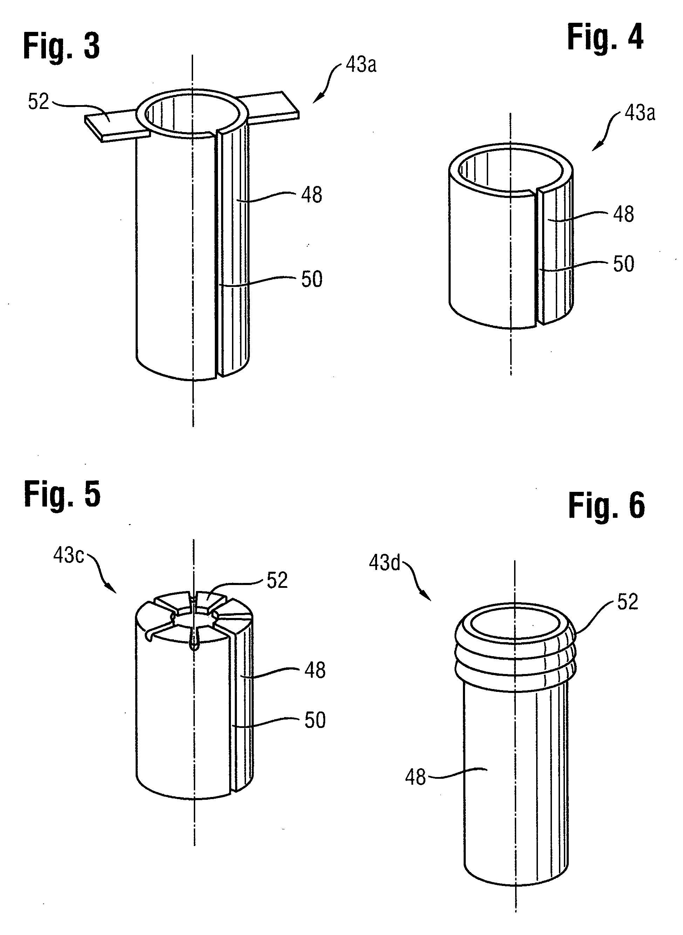

Beispiele für die Ausbildung eines Gewindeschutzes 43 zeigen die Figuren 3 bis 6.

Figur 3 zeigt einen Gewindeschutz 43a mit einer aus einem Kunststoff geformten Hülse 48, die als Fixierstruktur 50 einen durchgehenden Längsschlitz aufweist, sodass sich die Hülse 48 unter Vorspannung an das Innengewinde 42 anlegen kann. Am axial oberen Ende der Hülse 48 sind als weitere Fixierstruktur 52 zwei in Radialrichtung abstehende Flügel angeformt, die über der Schlagfläche 24 liegen und zur Fixierung des Gewindeschutzes 43a am Zwischenstück 28 oder an der Schulter 18 des Bohrers 12 dienen.

In Figur 4 ist ein einfacher aufgebauter Gewindeschutz 43b dargestellt. Es ist lediglich eine geschlitzte Hülse 48 vorgesehen, die sich nur über etwa zwei Drittel der Länge des Befestigungselements 22 erstreckt. Der Gewindeschutz 43b kann beispielsweise so ausgebildet sein, dass er beim Einschrauben einer Schraube in das Innengewinde 42 nach unten aus dem Gewinde herausgedrückt wird.

Bei der in Figur 5 gezeigten Variante 43c eines Gewindeschutzes ist die Hülse 48, die ebenfalls mit einem Schlitz versehen ist, am axial oberen Ende radial nach innen umgefaltet, um eine Fixierstruktur 52 zu erzeugen.

Figur 6 zeigt schließlich als letztes Beispiel einen Gewindeschutz 43d, bei dem am oberen Ende der Hülse 48 als Fixierstruktur 52 mehrere radial leicht nach außen stehende umlaufende Klemmrippen ausgebildet sind, wie sie in etwa von herkömmlichen Gummistopfen bekannt sind. Ein Längsschlitz kann außerdem vorgesehen sein. Jede der gezeigten Arten von Gewindeschutz 43a bis 43d kann jedoch auch ohne einen Längsschlitz ausgebildet sein.

Der Gewindeschutz 43 kann natürlich auch auf jede andere geeignete Art realisiert sein. Auch in den im Weiteren beschriebenen Ausführungsformen, in denen der Gewindeschutz 43 nicht explizit gezeigt ist, ist ein solcher Gewindeschutz 43 wie beschrieben verwendbar.

Das Befestigungssystem 10 wird zur Montage des Befestigungselements 22 in einem Bohrloch mit einem (nicht dargestellten) Antriebsgerät, beispielsweise einer Bohrmaschine, verbunden. Zur Verbindung mit dem Antriebsgerät weist der Bohrer 12 eine Werkzeugaufnahme 64 auf. Über das Antriebsgerät wird der Bohrer 12 mit axialen sowie tangentialen Pulsen bzw. einer Rotationsbewegung angetrieben. Die Bohrspitze 16 bohrt ein Pilotloch 44 in den Untergrund 46, das durch das Befestigungselement 22 bzw. dessen Schneidkante 26 und Abbaufläche 27 aufgeweitet wird. Hat das Bohrloch die gewünschte Tiefe erreicht, wird der Bohrer 12 zurückgezogen, inklusive des Zwischenstücks 28, wobei das Befestigungselement 22 im Bohrloch verbleibt.

Der Gewindeschutz 43 ist entweder so gestaltet, dass er nach Setzen des Befestigungselements 22 nach oben aus dem Bohrloch entfernt werden kann, beispielsweise indem er automatisch mit Entfernen des Bohrers 12 oder des Zwischenstücks 28 herausgezogen wird, oder er ist so ausgebildet, dass er bei Einschrauben einer Schraube in das Innengewinde 42 nach unten in das Pilotloch 44 gedrückt wird, oder auch so, beispielsweise als zähes Fett oder Wachs, dass er aus dem Innengewinde 42 verdrängt wird, wenn eine Schraube eingeschraubt wird.

Das Innengewinde 42 des Befestigungselements 22 kann jetzt dazu verwendet werden, um einen zu befestigenden Gegenstand im Bohrloch zu verankern. Das Befestigungselement 22 kann Lasten in der Größenordnung üblicher Dübel in den Untergrund 46 einleiten.

Sämtliche Merkmale und Varianten der einzelnen Ausführungsformen sind untereinander kombinierbar und im Ermessen des Fachmanns frei gegeneinander austauschbar.

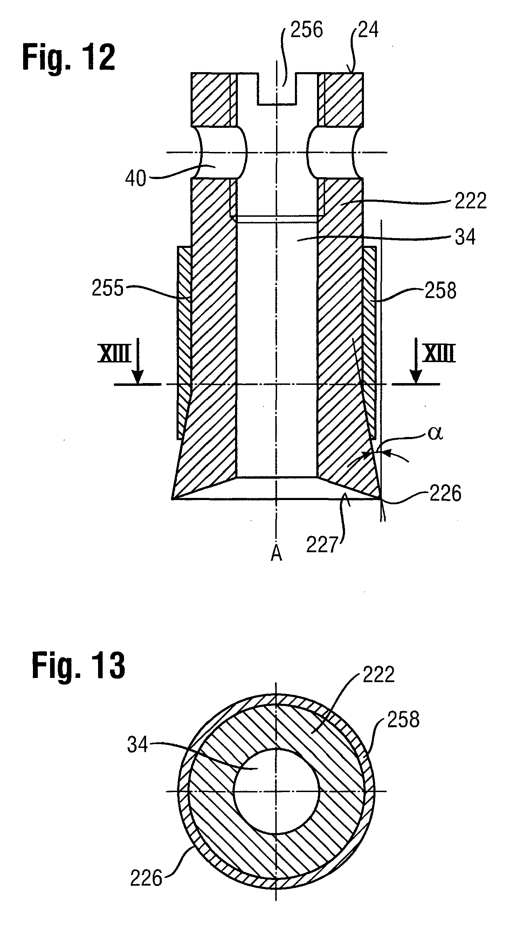

Figur 12 zeigt eine zweite Ausführungsform eines Befestigungselements 222.

In diesem Fall ist kein Zwischenstück vorgesehen, und die Auswurföffnungen 40 sind im axial oberen Bereich des Befestigungselements 222 selbst ausgebildet.

Das axial untere Ende ist so ausgebildet, dass direkt anschließend an die umlaufende Schneidkante 246 der Außenquerschnitt des Befestigungselements 222 reduziert ist. Hierdurch ist ein Freiwinkel a realisiert, der gegenüber der Mantelfläche 255 des Befestigungselements 222 etwa 1 bis 20° und vorteilhaft zwischen 3 und 8° beträgt. Die Querschnittsreduzierung verringert den Querschnitt des Befestigungselements 222 um mehr als 0,1 mm, idealerweise um 1,5 bis 5 % gegenüber einem mittleren Abschnitt des Befestigungselements 222. Die Länge des Freiwinkels ergibt sich geometrisch aus dem Betrag der Querschnittsreduzierung und dem Winkel, in dem die Mantelfläche 255 gegenüber der Axialrichtung A geneigt ist, sie kann aber bis zu einem Drittel der axialen Länge des Befestigungselements 222 betragen.

Die radial nach innen an die Schneidkante 246 anschließende vordere Abbaufläche 227, die das Untergrundmaterial abbaut, ist gegenüber der Mantelfläche 255 des Befestigungselements 222 unter einem Winkel ausgerichtet, der zwischen 10 und 120° betragen kann, wobei Winkel zwischen 20 und 80° vorteilhaft sind.

Die Schlagfläche 24, mit der das Befestigungselement 222 in Kontakt mit der Schlagfläche 20 des Bohrers 12 steht, ist, wie beim ersten Ausführungsbeispiel, im Wesentlichen waagrecht ausgebildet, wobei die Winkelabweichung bis zu 3° betragen kann.

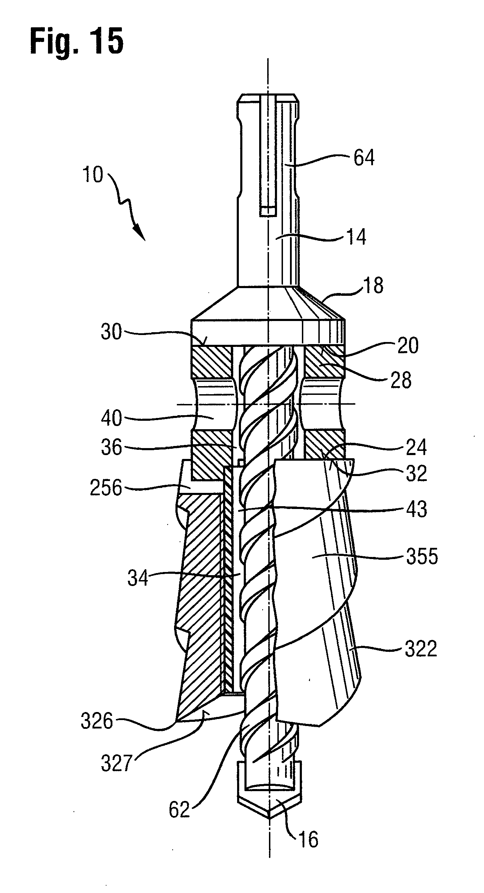

Der Querschnitt der Mantelfläche 255 des Befestigungselements 222 ist hier kreisförmig und konzentrisch um die Durchgangsöffnung 34 angeordnet. Es sind aber auch nicht kreisförmige Querschnitte realisierbar, wie beispielsweise quadratische Querschnitte. Der Querschnitt kann über die axiale Erstreckung des Befestigungselements variieren (siehe z.B. Fig. 15). Dabei sind Formen der Mantelfläche denkbar, bei denen ein beispielsweise quadratischer Querschnitt in Axialrichtung jeweils um einen bestimmten Winkel versetzt ist. Derartige Querschnittsformen können beispielsweise genutzt werden, um eine Drehmomentabstützung über das Befestigungselement zu realisieren.

Das hier gezeigte Befestigungselementen 222 ist dazu vorgesehen, nach dem vollständigen Setzen noch über die Oberkante des Untergrunds 46 hervorzustehen. Daher sind die Auswurföffnungen 40 im Befestigungselement 222 selbst angeordnet. Bei Befestigungselementen wie dem in der ersten Ausführungsform beschriebenen Befestigungselement 22, das nach dem Setzen unter der Oberfläche des Untergrunds 46 angeordnet ist, wird vorzugsweise ein separates Zwischenstück 28 eingesetzt, in dem die Auswurföffnungen 40 angeordnet sind.

Um unter Last Kräfte und Momente besser in den Untergrund 46 einleiten zu können, weist das Befestigungselement 222 hier eine Befestigungsgeometrie im Bereich seiner Mantelfläche 255 auf.

Die Befestigungsgeometrie kann sich über die gesamte axiale Länge des Befestigungselements 222 erstrecken oder nur über einen Teil davon.

Im in Figur 12 dargestellten Fall ist die Befestigungsgeometrie in Form einer Spreizhülse 258 realisiert, die auf einen Bereich des Befestigungselements 222 aufgeschoben ist, in dem die Mantelfläche 255 im Wesentlichen einen gleichbleibenden äußeren Durchmesser aufweist. Der Freiwinkel α, der durch die Mantelfläche255 und die Schneidkante 226 gebildet ist, ist von der Spreizhülse 258 nicht oder nur zu einem kleinen Teil verdeckt.

In Fällen wie diesem, in dem das Befestigungselement 222 eine Konusspreizhülse aufweist, sind Freiwinkel α vorteilhaft, die gleich dem halben Konus-öffnungswinkel sind. In diesem Fall erfüllt die konusförmige Mantelfläche 255 zwei Funktionen, nämlich die Schaffung eines Freiwinkels α zum besseren Bearbeiten des Untergrunds 46 sowie die eines Spreizelements, zum besseren Verankern des Befestigungselements 222 im Untergrund 46.

Erst beim Fixieren des Befestigungselements 222 in der Bohrung im Untergrund 46 wird durch axiale Belastung des Befestigungselements 222 entgegen der Bohrrichtung durch die dann entstehende Relativbewegung zwischen dem Befestigungselement 222 und der Spreizhülse 258 diese aufgespreizt, wodurch das Befestigungselement 222 im Bohrloch verkeilt wird.

Die Befestigungsgeometrie lässt sich aber auch durch alle anderen bekannten mechanischen und chemischen Verankerungsmittel realisieren. Es können z.B. Injektionsmörtel eingesetzt werden, eventuell in Verbindung mit dem beschriebenen Spreizhülsenprinzip. Es ist möglich, wie beispielsweise in Figur 15 gezeigt, die äußere Mantelfläche 355 des Befestigungselements 322 mit einer gewendelten Befestigungsgeometrie zu versehen. In diesem Fall ist keine separate Spreizhülse nötig, da durch das Erzeugen eines gewendelten Hinterschnitts im Untergrundmaterial eine sichere Fixierung des Befestigungselements 322 erfolgt.

Der Querschnitt der Durchgangsöffnung 34 sowohl im Zwischenstück 28 als auch im Befestigungselement 222 ist bei der Verwendung eines rotierenden Bohrers vorzugsweise kreisförmig. Andere Querschnittsformen wären jedoch auch möglich.

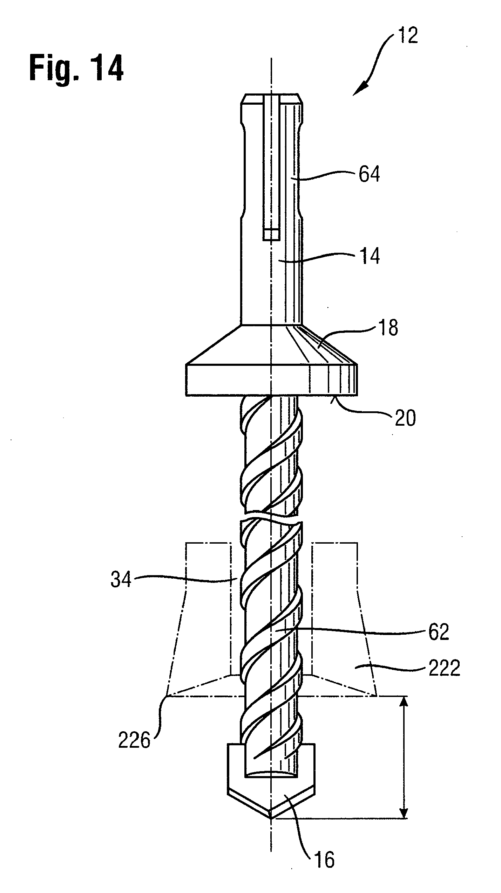

Figur 14 zeigt den hier als Bundbohrer gestalteten Bohrer 12 in größerem Detail. Der Bohrer 12 bohrt das Pilotloch 44 mittels der Bohrspitze 16, treibt das Befestigungselement 222 in den Untergrund 46 mittels der Schlagfläche 20 an der Schulter 18 und transportiert das Bohrklein. Hierzu weist der Bohrerschaft eine Wendel 62 auf, wie dies von herkömmlichen Bohrern bekannt ist.

Der Bohrer 12 weist eine Werkzeugaufnahme 64 auf, die Drehmomente und Schlagenergien vom Antriebsgerät in den Bohrer 12 einleitet. Durch die glatte Ausbildung der Schlagfläche 20 wird erreicht, dass lediglich die axiale Kraftkomponente vom Handgerät auf das Befestigungselement 222 übertragen wird, nicht aber tangential wirkende Kräfte.

Neben dem besseren Abbauergebnis durch die Schneidkante 226 wird so auch der Bohrmehltransport zwischen der feststehenden Innenseite der Durchgangsöffnung 34 und der sich drehenden Wendel 62 des Bohrers 12 verbessert.

Für die Bohrspitze 16 können zahlreiche bekannte Varianten realisiert werden, beispielsweise ein eingelötetes Hartmetallplättchen, ein aufgeschweißter Hartmetallkopf oder ein HSS-Bohrkopf. Als besonders vorteilhaft hat sich erwiesen, eine zentrische Anordnung eines symmetrischen Bohrkopfs relativ zum Bohrerschaft 14 vorzusehen, da hier die Verbindung zwischen Bohrspitze 16 und Bohrerschaft 14 sehr robust ausgeführt werden kann.

Eine andere Ausführungsform, die sich als vorteilhaft herausgestellt hat, ist die Verwendung einer exzentrischen Seitenschneide, die ein größeres Bohrloch erzeugt, als der Durchmesser der Bohrspitze 16 beträgt. Hierdurch wird im Verhältnis zum Befestigungselement 222 mehr Untergrundmaterial abgebaut, sodass die Schneidkante 226 des Befestigungselements 222 weniger Arbeit leisten muss.

Generell werden für spröde Untergründe 46 wie beispielsweise Beton eher den Untergrund zertrümmernde Schneidgeometrien eingesetzt und für zähe Untergründe 46 wie beispielsweise Holz eher den Untergrund zerschneidende Schneidgeometrien.

Um das Bohrklein zu entfernen, könnten auch hohle Bohrschäfte eingesetzt werden, durch die das Bohrklein abgesaugt wird oder über die Luft eingeblasen wird, um das Bohrklein durch den Zwischenraum zwischen Bohrerschaft und Innenseite des Befestigungselements 222 auszublasen.

In einer möglichen Ausführungsform, die hier nicht näher dargestellt ist, weist der Bohrerschaft 14 eine Schlagentkopplung auf, die so ausgebildet ist, dass keine Schlagenergie in die Bohrspitze 16 eingeleitet wird, obwohl das Antriebsgerät axiale Schlagimpulse in die Werkzeugaufnahme 64 einleitet.

Die Schlagentkopplung kann beispielsweise in Form eines elastischen Abschnitts des Bohrerschafts 14 realisiert sein und somit in den Bohrerschaft 14 selbst integriert sein. Sie kann auch ein separates, elastisches Bauteil sein, das am vorderen axialen Ende des Bohrerschafts 14 zwischen diesem und der Bohrspitze 16 vorgesehen ist. In beiden Fällen wird die axiale Schlagenergie durch die Schlagentkopplung so stark gedämpft, dass im Wesentlichen eine reine Rotationsbewegung der Bohrspitze 16 erfolgt.

Figur 15 zeigt eine weitere Ausführungsform eines Befestigungssystems 10.

Hier ist wie in der ersten Ausführungsform neben dem Befestigungselement 322 ein Zwischenstück 28 vorgesehen. Über eine Drehmomentabstützung 256, die in Form eines Vorsprungs am Umfang des Zwischenstücks 28 und einer entsprechenden Ausnehmung am Befestigungselement 322 realisiert ist, sind das Zwischenstück 28 und das Befestigungselement 322 bezüglich Rotation miteinander gekoppelt.

Die Mantelfläche 355 des Befestigungselements 322 weist wie oben bereits beschrieben eine gewendelte Befestigungsgeometrie auf. An die Schneidkante 327 anschließend ist ein Freiwinkel α ausgebildet.

## Patentansprüche

1. Befestigungssystem mit
einem Bohrer (12) und
einem eine Schneidkante (26; 226) und eine Schlagfläche (24) aufweisenden, hülsenartigen Befestigungselement (22; 222; 322), das so ausgebildet ist, dass es nach Abschluss der Bohrarbeiten im Bohrloch verbleibt, wogegen der Bohrer (12) entfernt wird,
wobei das Befestigungselement (22; 222; 322) über die Schlagfläche (24) mit axial wirkenden Kräften beaufschlagbar ist und
das Befestigungselement (22; 222; 322) eine axiale, mit einem Innengewinde (42) versehene Durchgangsöffnung (34) aufweist, durch die sich der Bohrer (12) erstreckt,
**dadurch gekennzeichnet, dass** ein separater Gewindeschutz (43) für das Innengewinde (42) vorgesehen ist.

2. Befestigungssystem nach Anspruch 1, **dadurch gekennzeichnet, dass** der Gewindeschutz (43) eine Kunststoffhülse (48) umfasst.

3. Befestigungssystem nach einem der vorhergehenden Ansprüche, **dadurch gekennzeichnet, dass** der Gewindeschutz (43) eine Fixierstruktur (50, 52) aufweist, mittels der er in der Durchgangsöffnung (34) fixiert ist.

4. Befestigungssystem nach einem der vorhergehenden Ansprüche, **dadurch gekennzeichnet, dass** der Gewindeschutz (43) so ausgebildet ist, dass er bei der Entfernung des Bohrers (12) aus dem Bohrloch aus dem Befestigungselement (22; 222; 322) entfernbar ist.

5. Befestigungssystem nach einem der vorhergehenden Ansprüche, **dadurch gekennzeichnet, dass** der Bohrer (12) eine mit der Schlagfläche (24) des Befestigungselements (22; 222; 322) zusammenwirkende Schlagfläche (20) zur Übertragung von axialen Kräften aufweist.

6. Befestigungssystem nach einem der vorhergehenden Ansprüche, **dadurch gekennzeichnet, dass** eine Mantelfläche (255; 355) des Befestigungselements (222; 322) angrenzend an die Schneidkante (226; 326) im Querschnitt so reduziert ist, dass ein Freiwinkel (α) zwischen der Schneidkante (226; 326) und der Mantelfläche (255; 355) gebildet ist.

7. Befestigungssystem nach Anspruch 6, **dadurch gekennzeichnet, dass** der Freiwinkel zwischen 1° und 20°, bevorzugt zwischen 3° und 8°, beträgt.

8. Befestigungssystem nach einem der vorhergehenden Ansprüche, **dadurch gekennzeichnet, dass** die Schneidkante (26; 226; 326) nicht vollständig in einer Ebene liegt.

9. Befestigungssystem nach einem der vorhergehenden Ansprüche, **dadurch gekennzeichnet, dass** die Schneidkante (26; 226; 326) umlaufend ist.

10. Befestigungssystem nach einem der vorhergehenden Ansprüche, **dadurch gekennzeichnet, dass** eine Mantelfläche (255; 355) des Befestigungselements (222; 322) eine Befestigungsgeometrie zur Fixierung des Befestigungselements (222; 322) im Bohrloch aufweist.

11. Befestigungssystem nach einem der vorhergehenden Ansprüche, **dadurch gekennzeichnet, dass** ein Zwischenstück (28) vorgesehen ist, das in axialer Richtung (A) angrenzend an die Schlagfläche (24) des Befestigungselements angeordnet ist und das vom Befestigungselement (22; 322) trennbar ist.

12. Befestigungssystem nach einem der vorhergehenden Ansprüche, **dadurch gekennzeichnet, dass** der Gewindeschutz (43) am Zwischenstück (28) befestigt ist.

13. Befestigungssystem nach einem der vorhergehenden Ansprüche, **dadurch gekennzeichnet, dass** von der Durchgangsöffnung (34) ausgehende Auswurföffnungen (40) vorgesehen sind und die Auswurföffnungen (40) im Befestigungselement (222) und/oder im Zwischenstück (28) angeordnet sind.

14. Befestigungssystem nach einem der vorhergehenden Ansprüche, **dadurch gekennzeichnet, dass** der Bohrer (12) in einem Schaftbereich eine Schlagentkopplung und/oder Schlagdämpfung aufweist.

## Claims

1. Fastening system, comprising
a drill bit (12) and
a bush-like fastening element (22; 222; 322) having a cutting edge (26; 226) and an impact face (24), which fastening element (22; 222; 322) is configured in such a way that it remains in the drill hole upon completion of the drilling work, whereas the drill bit (12) is removed,
wherein the fastening element (22; 222; 322) can be subjected to axially-acting forces via the impact face (24) and
the fastening element (22; 222; 322) has an axial through-opening (34) provided with an internal thread (42) through which the drill bit (12) extends,
**characterised in that** a separate thread protector (43) is provided for the internal thread (42).

2. Fastening system according to Claim 1, **characterised in that** the thread protector (43) comprises a plastics sleeve (48).

3. Fastening system according to either of the preceding claims, **characterised in that** the thread protector (43) has a fixing structure (50, 52) by means of which it is fixed in the through-opening (34).

4. Fastening system according to any one of the preceding claims, **characterised in that** the thread protector (43) is configured in such a way that it can be removed from the fastening element (22; 222; 322) upon removal of the drill bit (12) from the drill hole.

5. Fastening system according to any one of the preceding claims, **characterised in that** the drill bit (12) has an impact face (20) for transmitting axial forces which cooperates with the impact face (24) of the fastening element (22; 222; 322).

6. Fastening system according to any one of the preceding claims, **characterised in that** a lateral surface (255; 355) of the fastening element (222; 322) adjacent to the cutting edge (226; 326) is reduced in cross section in such a way that a clearance angle (α) is formed between the cutting edge (226; 326) and the lateral surface (255; 355).

7. Fastening system according to Claim 6, **characterised in that** the clearance angle is from 1° to 20°, preferably from 3° to 8°.

8. Fastening system according to any one of the preceding claims, **characterised in that** the cutting edge (26; 226; 326) does not lie wholly in one plane.

9. Fastening system according to any one of the preceding claims, **characterised in that** the cutting edge (26; 226; 326) is circumferential.

10. Fastening system according to any one of the preceding claims, **characterised in that** a lateral surface (255; 355) of the fastening element (222; 322) has a fastening geometry for fixing the fastening element (222; 322) in the drill hole.

11. Fastening system according to any one of the preceding claims, **characterised in that** an intermediate part (28) is provided, which intermediate part (28) is arranged in abutment with the impact face (24) of the fastening element in the axial direction (A) and can be separated from the fastening element (22; 322).

12. Fastening system according to any one of the preceding claims, **characterised in that** the thread protector (43) is fastened to the intermediate part (28).

13. Fastening system according to any one of the preceding claims, **characterised in that** ejection holes (40) starting from the through-opening (34) are provided and the ejection holes (40) are arranged in the fastening element (222) and/or in the intermediate part (28).

14. Fastening system according to any one of the preceding claims, **characterised in that** the drill bit (12) has an impact-uncoupling and/or impact-damping means in a shank region.

## Revendications

1. Système de fixation comportant :
une mèche (12) et
un élément de fixation (22 ; 222 ; 322) en forme de douille, comportant une arête tranchante (26 ; 226) et une surface de percussion (24), formé de telle sorte qu'il reste dans le trou de perçage après achèvement des travaux de perçage, alors que la mèche (12) est retirée,
dans lequel des forces agissant axialement peuvent être appliquées à l'élément de fixation (22 ; 222 ; 322) par l'intermédiaire de la surface de percussion (24) et
l'élément de fixation (22 ; 222 ; 322) comporte une ouverture traversante (34) munie d'un filetage intérieur (42), à travers laquelle s'étend la mèche (12),
**caractérisé en ce qu'**une protection de filetage séparée (43) est prévue pour le filetage intérieur (42).

2. Système de fixation selon la revendication 1, **caractérisé en ce que** la protection de filetage (43) inclut une douille en matière plastique (48).

3. Système de fixation selon l'une des revendications précédentes, **caractérisé en ce que** la protection de filetage (43) comporte une structure de fixation (50, 52) au moyen de laquelle elle est fixée dans l'ouverture traversante (34).

4. Système de fixation selon l'une des revendications précédentes, **caractérisé en ce que** la protection de filetage (43) est formée de telle sorte qu'elle peut être retirée de l'élément de fixation (22 ; 222 ; 322) lorsque la mèche (12) est retirée du trou de perçage.

5. Système de fixation selon l'une des revendications précédentes, **caractérisé en ce que** la mèche (12) a une surface de percussion (20) coopérant avec la surface de percussion (24) de l'élément de fixation (22 ; 222 ; 322) afin de transmettre des forces axiales.

6. Système de fixation selon l'une des revendications précédentes, **caractérisé en ce qu'**une surface d'enveloppe (255 ; 355) de l'élément de fixation (222 ; 322) adjacente à l'arête tranchante (226 ; 326) a une section transversale réduite de telle sorte qu'un angle de dégagement (α) est formé entre l'arête tranchante (226 ; 326) et la surface d'enveloppe (255 ; 355).

7. Système de fixation selon la revendication 6, **caractérisé en ce que** l'angle de dégagement est compris entre 1° et 20°, de préférence entre 3° et 8°.

8. Système de fixation selon l'une des revendications précédentes, **caractérisé en ce que** l'arête tranchante (26 ; 226 ; 326) n'est pas entièrement dans un plan.

9. Système de fixation selon l'une des revendications précédentes, **caractérisé en ce que** l'arête tranchante (26 ; 226 ; 326) est circonférentielle.

10. Système de fixation selon l'une des revendications précédentes, **caractérisé en ce qu'**une surface d'enveloppe (255 ; 355) de l'élément de fixation (222 ; 322) a une géométrie de fixation pour fixer l'élément de fixation (222 ; 322) dans le trou de perçage.

11. Système de fixation selon l'une des revendications précédentes, **caractérisé en ce qu'**est prévue une pièce intermédiaire (28) qui peut être agencée dans une direction axiale (A) adjacente à la surface de percussion (24) de l'élément de fixation et qui peut être séparée de l'élément de fixation (22 ; 322).

12. Système de fixation selon l'une des revendications précédentes, **caractérisé en ce que** la protection de filetage (43) est fixée à la pièce intermédiaire (28).

13. Système de fixation selon l'une des revendications précédentes, **caractérisé en ce que** des ouvertures de sortie (40) sortant de l'ouverture traversante (34) sont prévues et les ouvertures de sortie (40) sont agencées dans l'élément de fixation (222) et/ou dans la pièce intermédiaire (28).

14. Système de fixation selon l'une des revendications précédentes, **caractérisé en ce que** la mèche (12) comporte un mécanisme de découplage de percussion et/ou d'amortissement de percussion dans une zone de tige.
